Europäisches Patentamt

European Patent Office

Office européen des brevets

(11) Numéro de publication: **0 374 025**

**A1**

## (12) DEMANDE DE BREVET EUROPEEN

(21) Numéro de dépôt: **89403418.0**

(22) Date de dépôt: **11.12.89**

(51) Int. Cl.⁵: **B23D 47/04, B25B 5/06,**
**//B27G5/02**

(30) Priorité: **14.12.88 FR 8816443**

(43) Date de publication de la demande:
**20.06.90 Bulletin 90/25**

(84) Etats contractants désignés:
**AT BE CH DE ES FR GB GR IT LI LU NL SE**

(71) Demandeur: **Cassese, Antoine**
**Les Essarts No 7 Saint Germain Laxis**
**F-77950 Maincy(FR)**

(72) Inventeur: **Cassese, Antoine**
**Les Essarts No 7 Saint Germain Laxis**
**F-77950 Maincy(FR)**

(74) Mandataire: **Lhuillier, René et al**
**ARMENGAUD JEUNE CABINET LEPEUDRY 6,**
**rue du Fg. St-Honoré**
**F-75008 Paris(FR)**

(54) **Dispositif de blocage à coulisseau de baguettes ou profils adaptables à une scie pendulaire à une seule lame circulaire.**

(57) Le dispositif comporte essentiellement un bloc amovible qui se monte en avant du plateau mobile 8 de la machine et qui porte un coulisseau 12 prolongé par une tête de blocage 15, reposant sur un levier pivotant 18 sous l'action d'un vérin 24. Le coulisseau peut se déplacer en glissant sur le levier 18 sous l'action du vérin 14 ; la tête 15 peut ainsi pivoter vers le bas en appui sur un profil pour la maintenir, et se déplacer en translation pour dégager une chute de profil en dehors de la zone de coupe.

Application à la coupe de profils pour l'encadrement.

FIG.2

EP 0 374 025 A1

## Dispositif de blocage à coulisseau de baguettes ou profils adaptables à une scie pendulaire à une seule lame circulaire

L'invention a pour objet un dispositif de blocage à coulisseau de baguettes ou profils destinés à être tronçonnés par une machine scie pendulaire à une seule lame circulaire.

Dans le domaine de la confection des cadres destinés à entourer des tableaux, on sait que les cadres sont fabriqués à partir de baguettes d'encadrement ou de moulures en bois ou encore à partir de profils en d'autres matières que le bois comme par exemple des profils en aluminium. Ces baguettes et profils doivent évidemment être découpés en forme d'onglets pour être ultérieurement assemblés, et former un cadre rectangulaire, ou en coupes inclinées pour des cadres non rectangulaires. Pour assurer des découpes précises et rapides, il est habituel d'utiliser des machines à scier à lame circulaire. Certaines machines disposent de deux lames circulaires à axes de rotation horizontaux, orientées perpendiculairement l'une à l'autre, et montées sur un chassis déplaçable verticalement en translation. Elles permettent de couper en une seule passe deux onglets perpendiculaires. D'autres machines ne possèdent qu'une seule lame circulaire à axe horizontal, mais cette dernière peut prendre toutes orientations par rapport à une table-support, et effectuer des découpes selon n'importe quel angle choisi. Pour faciliter le repérage de l'angle de découpe, le plan vertical de la lame est solidaire d'une table pivotante intégrée au niveau de la table fixe. Ce genre de scie pendulaire est utilisé le plus souvent, comme la machine à deux lames, pour effectuer des découpes en forme d'onglets, aussi l'utilisateur doit-il faire pivoter la lame d'une première position où son plan de coupe est orienté à 45° dans un sens par rapport à la baguette ou au profil vers une seconde position où son plan de coupe est orienté à 45° dans l'autre sens. Ainsi en deux passes successives, la lame effectue sur la même baguette deux coupes en onglets orientés à 90° l'un par rapport à l'autre. Bien évidemment, pendant l'opération de sciage la baguette ou le profil est maintenu en appui contre une butée fixe qui s'étend sur la longueur de la table fixe, par des butées de blocage disposées de part et d'autre de la zone de coupe. Si la pièce à couper est une baguette ou une moulure en bois, les deux coupes peuvent être effectuées successivement sans difficulté puisque chaque tronçon découpé est maintenu par au moins une butée de blocage. Quand à la chute triangulaire centrale qui sera obtenue après la seconde découpe, elle restera en position puisqu'il n'y a pas de discontinuité dans le bois au fur et à mesure de son sciage. Il n'en est malheureusement pas de même quand il s'agit de tronçonner un profil. En effet ce profil creux présentant une faible épaisseur de paroi, habituellement réalisé en forme de C repose par sa base sur la table fixe, son flanc horizontal est en appui contre la butée fixe mais sa face supérieure horizontale fait retour au dessus de la table et n'est en appui sur aucun élément fixe. Cette face supérieure, quand la lame descend, est attaquée la première par la lame et coupée. En continuité la lame va couper la face verticale, puis les dents de la lame vont atteindre la face de base qui forme une discontinuité par rapport à la face verticale. De ce fait la chute triangulaire centrale, non maintenue elle-même, est soumise à une forte contrainte et violemment projetée à l'extérieur, avec les risques que cela peut entraîner, de blessure pour l'utilisateur ou de détérioration de la machine ou du profil découpé. Pour éviter cet inconvénient il serait nécessaire de changer de lame quand on change le produit à couper.

L'invention apporte une solution à ce problème en ce qu'elle propose un dispositif de blocage particulier, adaptable aux scies pendulaires à une seule lame circulaire, qui permet de maintenir la partie centrale d'un profil dans la zone de coupe, pour que la chute triangulaire obtenue soit maintenue pendant l'opération de sciage, puis dégagée de la zone de coupe quand l'opération est terminée avant la remontée de la lame, évitant ainsi les inconvénients précités.

Un objet de la présente invention consiste en un dispositif de blocage de la chute centrale résultant des deux coupes effectuées sur un même profil par une scie pendulaire à une lame unique montée pivotante pour pouvoir assurer la découpe dudit profil en appui sur une table fixe contre une butée, selon un angle choisi par rapport à sa direction longitudinale, et utilisant une tête de blocage en bout d'un coulisseau mobile longitudinalement et verticalement, dispositif selon lequel le coulisseau mobile est monté sur un bloc amovible qui se positionne en appui contre le flanc de la table fixe, son extrémité portant la tête de blocage s'étendant au-dessus de la table en direction de la zone de coupe et pouvant se déplacer verticalement de haut en bas pour s'appliquer contre la chute centrale du profil et la maintenir appliquée sur la table, sous l'action d'organes moteurs solidaires du bloc amovible.

Selon une caractéristique particulière de l'invention, le coulisseau mobile repose sur un levier pivotant autour d'un axe horizontal prenant dans le bloc sous l'action d'un vérin à l'encontre d'un ressort de rappel.

Selon une autre caractéristique particulière de l'invention, le coulisseau mobile porte un vérin dont la tige prend appui sur le bloc, pour écarter ledit coulisseau dudit bloc à l'encontre de la force de rappel d'un ressort, en glissant sur le levier pivotant.

Avantageusement la partie centrale du bloc amovible porte une rainure orientée en direction de la zone de coupe destinée à recevoir et guider le coulisseau mobile.

D'autres caractéristiques particulières et avantages de l'invention apparaîtront à la lecture de la description qui va suivre d'une forme de réalisation prise à titre d'exemple non limitatif dans laquelle il sera fait référence aux dessins qui représentent :

figure 1, une vue en perspective d'une scie pendulaire avec le dispositif de blocage susceptible de s'y adapter ;

figure 2, une vue de dessus du dispositif de blocage monté sur le devant de la table fixe de la scie pendulaire ;

figure 3 une vue en coupe selon III-III de la figure 2.

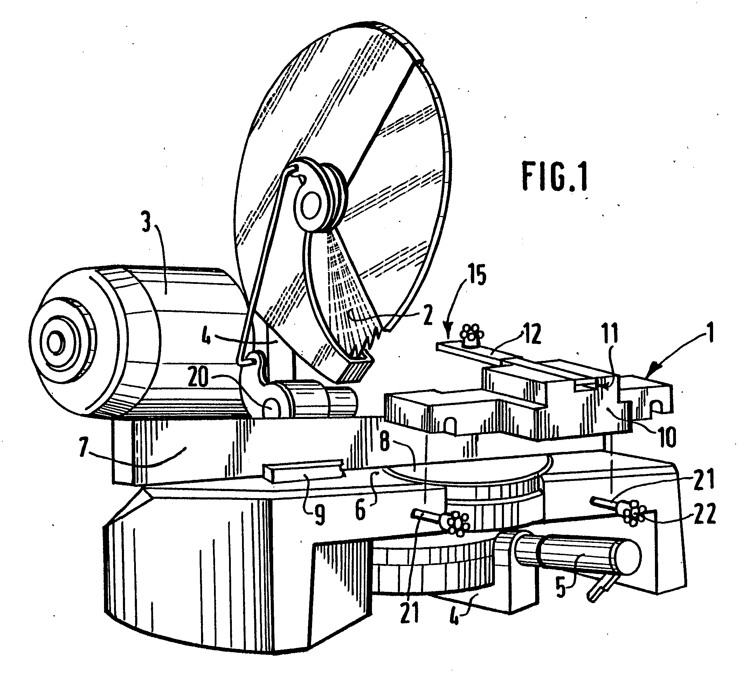

On a représenté à la figure 1 une vue générale d'une scie pendulaire comportant une lame unique 2 tournant autour d'un axe horizontal et entraînée par un moteur 3. L'ensemble lame-moteur est monté sur une potence 4 qui peut pivoter autour d'un axe vertical sous l'action manuelle d'une poignée de manoeuvre 5, ce qui permet d'orienter le plan vertical de la lame par rapport à une table fixe 6 pourvue d'une butée fixe longitudinale 7. Une table tournante 8, intégrée au niveau de la table fixe 6 et munie de moyens de blocage, suit le mouvement de pivotement de la potence et permet de repérer l'angle de la lame par rapport à la butée 7 contre laquelle vient en appui le profil 9 à tronçonner. Enfin l'ensemble lame-moteur est monté sur la potence support 4 par une articulation à axe horizontal 20 grâce à laquelle la lame 2 peut descendre progressivement en direction de la table pour assurer la coupe d'un profil.

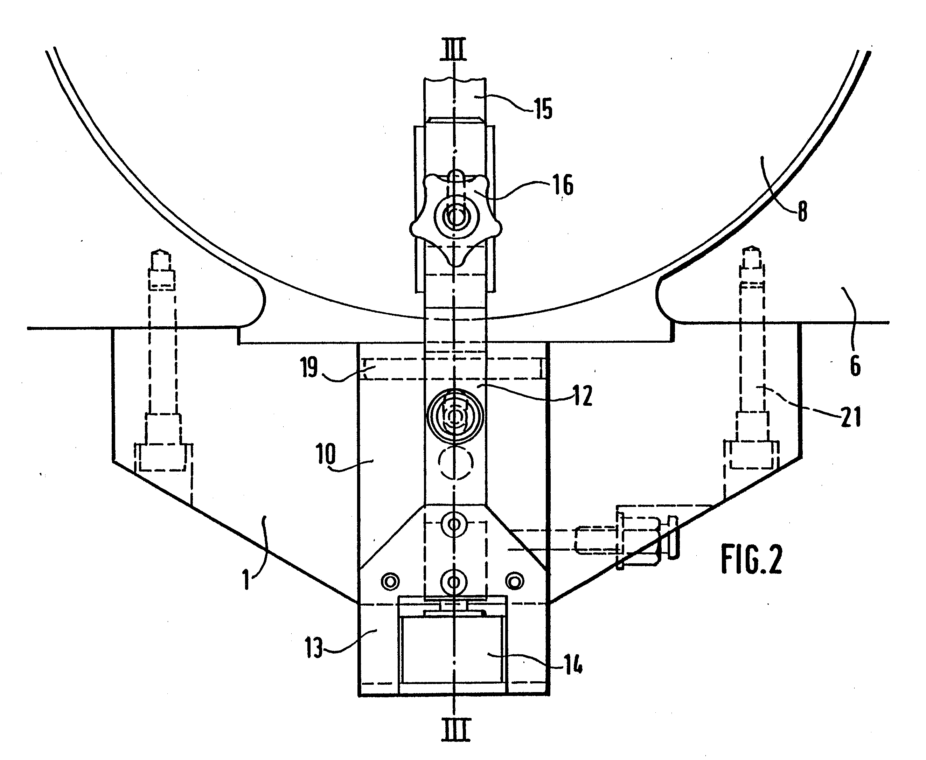

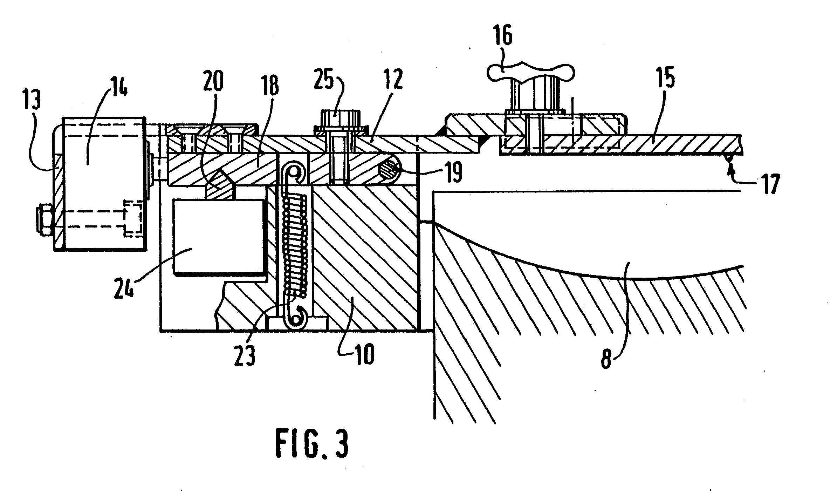

La table fixe 6 porte sur sa face avant deux tiges support horizontales 21 terminées par des poignées de verrouillage 22, destinées à recevoir le dispositif de blocage formé d'un bloc désigné dans son ensemble par la référence 1, et qui sera décrit maintenant plus en détail en se référant aux figures 2 et 3. Ce bloc amovible 1 est donc destiné à reposer sur les deux tiges 21 et est maintenu, par les poignées 22, en appui contre le flanc de la table fixe 6 et centré en face de la table tournante 8. La partie centrale 10 du bloc 1, porte une rainure 11 orientée en direction de la zone de coupe, qui reçoit et guide un coulisseau 12 se prolongeant vers l'extérieur du bloc par une potence 13 qui porte un vérin 14 dont la tige vient en butée contre le bloc 1. le vérin 14 agit pour écarter l'ensemble coulissant 12, 13 du bloc 1 à l'encontre de la force de rappel d'un ressort non représenté, en glissant sur le levier pivotant 18. L'extrémité opposée du coulisseau 12 s'étend au dessus de la table tournante 8 et se prolonge par une tête coulissante 15 dont la position longitudinale par rapport au coulisseau est réglable, un bouton 16 de verrouillage permettant de l'immobiliser dans la position voulue par rapport au coulisseau,

La face inférieure de la tête 15 est enfin munie, à l'extrémité de cette dernière, de deux petits picots 17 dont le rôle sera expliqué plus loin.

Dans la rainure, le coulisseau 12 repose sur un levier pivotant 18 maintenu en appui en position horizontale contre le fond de la rainure par un ressort de rappel 23 lui-même accroché au bloc 1. Le levier 18 peut pivoter autour d'un petit axe horizontal 19 prenant dans le bloc 1 sous l'action de la tige de poussée 20, s'exerçant de bas en haut, d'un autre vérin 24 monté à l'intérieur du bloc 1. Une entretoise de guidage 25, ancrée dans le levier pivotant 18, traverse le coulisseau 12 et le maintient en appui contre ledit levier. L'orifice oblong de traversée autorise le déplacement longitudinal du coulisseau sur le levier pivotant. On notera que les vérins 14 et 24 sont raccordés par des tubes flexibles non représentés à un dispositif de commande approprié.

Le dispositif de blocage fonctionne de la façon suivante : Pour assurer la coupe d'un profil 9 en forme de C placé sur la table 6 on commence par le plaquer contre la butée 7 par des butées de blocage non représentées disposées de part et d'autre de la zone centrale de coupe. Après avoir positionné le bloc 1 sur les tiges 21 et l'avoir verrouillé contre la table 6, on déplace la tête 15 pour que son extrémité vienne près de la paroi verticale du profil et soit donc au dessus de sa base. Puis on verrouille la tête 15 sur le coulisseau 12 grâce au bouton 16. La commande du vérin 24 provoque alors le pivotement du levier 18 autour de l'axe 19 et donc le basculement du coulisseau 12 porté par le levier. Par conséquent la tête 15 s'abaisse et vient s'appliquer contre la base du profil dans la zone centrale de coupe par l'intermédiaire des petits picots 17 qui évitent tout glissement. L'opérateur peut alors assurer les coupes en forme d'onglets dans les deux directions perpendiculaires, de part et d'autre d'une partie centrale du profil solidement maintenu par la tête 15.

Quand la deuxième coupe se termine, la chute triangulaire centrale reste maintenue en position par la tête 15 jusqu'à la fin de l'opération avant la remontée de la lame. Puis le vérin 14 entre en action et déplace le coulisseau 12 en écartant ainsi la tête 15 en direction du bloc 1. Les picots 17, favorisant l'accrochage de la tête et de la chute triangulaire, cette dernière est aisément dégagée de la zone de coupe. Puis les vérins 14 et 24 sont arrêtés ; le ressort 23 rappelle le levier 18 et le coulisseau 12 en position horizontale et le ressort de l'autre vérin 14 fait déplacer le coulisseau dans sa position première, en direction de la zone de coupe. Le dispositif de blocage est prêt pour une nouvelle opération.

Au cas où ce dispositif n'est plus nécessaire, quand on souhaite par exemple entreprendre la coupe de baguettes en bois, on désolidarise le bloc 1 de la table 6 en dévissant les poignées 22, et en le dégageant des tiges 21.

## Revendications

1.- Dispositif de blocage de la chute centrale résultant des deux coupes effectuées sur un même profil par une scie pendulaire à lame unique montée pivotante pour pouvoir assurer la découpe dudit profil en appui sur une table fixe contre une butée, selon un angle choisi par rapport à sa direction longitudinale, et utilisant une tête de blocage en bout d'un coulisseau mobile longitudinalement et verticalement, caractérisé en ce que le coulisseau mobile (12) est monté sur un bloc amovible (1) qui se positionne en appui contre le flanc de la table fixe (6), et en ce que son extrémité portant la tête de blocage (15) s'étend au-dessus de la table (6) en direction de la zone de coupe et peut se déplacer verticalement de haut en bas pour s'appliquer contre la chute centrale du profil et la maintenir appliquée sur la table, sous l'action d'organes moteurs (14, 24) solidaires du bloc amovible (1).

2.- Dispositif de blocage selon la revendication 1 caractérisé en ce que le coulisseau mobile (12) repose sur un levier (18) pivotant autour d'un axe horizontal (19) prenant dans le bloc (1) sous l'action d'un vérin (24), à l'encontre d'un ressort de rappel (23).

3.- Dispositif de blocage selon les revendications 1 et 2, caractérisé en ce que le coulisseau mobile (12) porte un vérin (14) dont la tige prend appui sur le bloc (1), pour écarter ledit coulisseau dudit bloc à l'encontre de la force de rappel d'un ressort, en glissant sur le levier pivotant (18).

4.- Dispositif de blocage selon la revendication 3, caractérisé en ce que le coulisseau mobile (12) se prolonge vers l'extérieur du bloc par une potence (13) qui porte le levier (14).

5.- Dispositif de blocage selon les revendications 1 et 2, caractérisé en ce que la partie centrale (10) du bloc (1), porte une rainure (11) orientée en direction de la zone de coupe destinée à recevoir et guider le coulisseau (12).

6.- Dispositif de blocage selon les revendications 1 et 2, caractérisé en ce qu'une entretoise de guidage (25), ancrée dans le levier pivotant (18) traverse le coulisseau (12) par un orifice oblong de traversée et le maintient en appui contre ledit levier.

7.- Dispositif de blocage selon la revendication 1, caractérisé en ce que la tête de blocage (15) est montée coulissante sur le coulisseau (12) et peut être verrouillée par un bouton (16).

8.- Dispositif de blocage selon la revendication 1, caractérisé en ce que la face inférieure de l'extrémité de la tête de blocage (15) est munie de deux petits picots (17).

9.- Dispositif de blocage selon la revendication 1, caractérisé en ce que le bloc amovible (1) repose sur deux tiges de support horizontales (21) prévues sur la face avant de la table fixe (6) et est verrouillé dans cette position par des poignées (22).

FIG.1

EP 0 374 025 A1

FIG.2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 002 094 (H.L. ERICKSON et al.) * Colonne 2, lignes 65-68; colonne 3, lignes 1-2,49-56; colonne 6, lignes 58-68; colonne 7, lignes 1-9; figures 1,7,12 * | 1-3 | B 23 D 47/04 B 25 B 5/06 // B 27 G 5/02 |
| A | | 4-9 | |
| Y | US-A-3 700 227 (D.W. SESSODY) * En entier * | 1-3 | |
| A | | 4-9 | |
| A | GB-A-1 333 149 (WILTON CORP.) * En entier * | 1-9 | |
| A | FR-A-2 069 666 (POWER JACKS LTD) * En entier * | 1-9 | |
| A | US-A-2 940 485 (W.B. ZERN) * Colonne 3, lignes 33-43; figures 1-9 * | 1-9 | |
| A | DE-A-3 203 447 (EUGEN LUTZ GmbH UND CO. MASCHINENFABRIK) * Page 8, lignes 12-14; figures 3,4 * | 1 | **DOMAINES TECHNIQUES RECHERCHES (Int. Cl.5)** B 23 D B 27 B B 25 B |

Le présent rapport a été établi pour toutes les revendications

| Lieu de la recherche | Date d'achèvement de la recherche | Examinateur |
|---|---|---|
| LA HAYE | 13-03-1990 | MOET H.J.K. |